# EUROPÄISCHE PATENTSCHRIFT

(11) **EP 2 910 757 B1**
(45) Veröffentlichungstag und Bekanntmachung des Hinweises auf die Patenterteilung: **20.02.2019**
(21) Anmeldenummer: 14195560.9
(22) Anmeldetag: 01.12.2014
(51) Int. Cl.: F02D 41/02, F02D 41/40, F02D 41/14, F02D 41/06

(54) **Verfahren zur Regeneration eines Partikelfilters eines Verbrennungsmotors sowie entsprechend ausgestaltete Steuermittel und Fahrzeug**
Method for regenerating a particulate filter of a combustion engine and correspondingly equipped control means and vehicle
Procédé de régénération d'un filtre à particules d'un moteur à combustion interne et moyen de commande en étant équipé et véhicule

(30) Priorität: 05.02.2014 DE 102014202050
(43) Veröffentlichungstag der Anmeldung: 26.08.2015
(73) Patentinhaber: Volkswagen Aktiengesellschaft, 38440 Wolfsburg (DE)
(72) Erfinder: Heilkenbrinker, Claus, 38162 Cremlingen (DE); Sarow, André, 39646 Oebisfelde (DE)
(74) Vertreter: Gulde & Partner

(56) Entgegenhaltungen:
- EP-A1- 1 584 809
- DE-A1-102005 054 387
- DE-C1- 10 149 745

## Beschreibung

Die vorliegende Erfindung betrifft ein Verfahren zur Regeneration eines Partikelfilters eines Verbrennungsmotors (insbesondere eines Dieselmotors) sowie entsprechend ausgestaltete Steuermittel und ein entsprechend ausgestaltetes Fahrzeug.

Die Druckschrift DE 10 2005 054 387 A1 offenbart die Regeneration eines Partikelfilters durch eine Nacheinspritzung in Intervallen.

Die Druckschrift DE 10 2004 033 414 A1 beschreibt die Ermittlung eines Maßes für den Ölstand des Motoröls einer Brennkraftmaschine, wobei wenigstens eine Kraftstoff-Nacheinspritzung berücksichtigt wird.

Die WO 2009/112056 A1 offenbart ein Verfahren zur Regenerierung einer Abgasreinigungsanlage, wobei mehrere Nacheinspritzungen ausgeführt werden können.

Die Druckschrift DE 101 49 745 C1 beschreibt ein Verfahren zum Aufheizen eines Katalysators im Abgassystem einer Brennkraftmaschine.

Die Druckschrift DE 10 2005 054 387 A1 offenbart ein Verfahren zur Regeneration eines Partikelfilters durch Nacheinspritzung in Intervallen.

Nächstliegender Stand der Technik ist die Druckschrift EP 1 584 809 A1, die ebenfalls ein Verfahren und eine Vorrichtung zur Regeneration einer Abgasnachbehandlungseinrichtung erläutert. In der Druckschrift wird vorgeschlagen, die Temperatur und/oder die Kohlenwasserstoffkonzentration der Abgase durch mindestens zwei Nacheinspritzungen von Kraftstoff im Arbeitstakt der Brennkraftmaschine zu erhöhen. Ein Zeitpunkt und die Kraftstoffmenge jeder der mindestens zwei Nacheinspritzungen werden abhängig von einer Temperaturdifferenz zwischen einer Soll- und einer Messtemperatur der Abgase der Brennkraftmaschine geregelt, wobei zwei Level einer Stationärbetriebskalibrierung eingestellt werden, von denen einer, der als eine Aufheizmodus-Kalibrierung dient, deaktiviert wird, wenn einmal eine Zieltemperatur erreicht ist.

Zur Regeneration eines Partikelfilters muss die Abgastemperatur oberhalb eines vorbestimmten Temperaturschwellenwerts (z. B. 350° C) liegen. Um die Abgastemperatur anzuheben, erfolgen Nacheinspritzungen im Arbeits- oder Ausschiebetakt des Verbrennungsmotors bzw. Dieselmotors. Diese Nacheinspritzungen können entweder aktiv an der Verbrennung teilnehmen oder als unverbrannte Kohlenwasserstoffe in die Abgasanlage gelangen. Dabei gelangen allerdings auch Teile des nacheingespritzten Kraftstoffs über die Zylinderlaufbahn in das Motorenöl. Dies kann mit der Zeit zu einer hohen Ölverdünnung und damit zu verkürzten Ölwechselintervallen, erhöhtem Bauteilverschleiß und im schlimmsten Fall zu Motorschäden aufgrund einer Ölüberfüllung führen.

Daher stellt sich die vorliegende Erfindung die Aufgabe, die Ölverdünnung aufgrund von Nacheinspritzungen gegenüber dem Stand der Technik zumindest zu verringern.

Erfindungsgemäß wird diese Aufgabe durch ein Verfahren zur Regeneration eines Partikelfilters nach Anspruch 1, durch Steuermittel für einen Verbrennungsmotor nach Anspruch 6 und durch ein Fahrzeug nach Anspruch 8 gelöst. Die abhängigen Ansprüche definieren bevorzugte und vorteilhafte Ausführungsformen der vorliegenden Erfindung.

Die Erfindung betrifft ein Verfahren zur schnellen Anhebung der Motor- und Abgastemperatur eines kalten Verbrennungsmotors für ein Fahrzeug auf eine Abgastemperatur, die zur Regeneration eines Partikelfilters in einem Regenerations-Betriebszustand oberhalb eines vorbestimmten Temperaturschwellenwerts liegt, wobei das Verfahren folgende Schritte umfasst:
Schalten in einen Vorwärm-Betriebszustand, in dem eine Vorwärmung von Abgasen des Verbrennungsmotors durchgeführt wird, wenn die Temperatur des Kühlwassers des Verbrennungsmotors größer als ein vorbestimmter Kühlwasser-Temperaturschwellenwert ist, und/oder wenn die Temperatur der Abgase größer als ein unterer Abgas-Temperaturschwellenwert ist, und/oder wenn das Fahrzeug seit dem Start des Verbrennungsmotors eine vorbestimmte Wegstrecke zurückgelegt hat; Aufteilen einer innermotorisch nacheinzuspritzenden Kraftstoffmenge auf eine Anzahl von innermotorischen Nacheinspritzungen während des Vorwärm-Betriebszustandes, wobei in dem Vorwärm-Betriebszustand innermotorisch eine Kraftstoffmenge in der ersten Nacheinspritzung und unter Aufteilung der Kraftstoffmenge der zweiten innermotorischen Nacheinspritzung eine Anzahl von zwei innermotorischen Nacheinspritzungen mit reduzierten Kraftstoffmengen pro innermotorischer Nacheinspritzung vorgenommen werden, wobei die Anzahl von innermotorischen Nacheinspritzungen größer ist als die Anzahl von innermotorischen Nacheinspritzungen in dem Regenerations-Betriebszustand oder einem Vorbereitungs-Betriebszustand bei dem zur Vorbereitung der Regeneration direkt in den Regenerations-Betriebszustand geschaltet wird; und Verlassen des Vorwärm-Betriebszustandes des Verbrennungsmotors zur Regeneration des Partikelfilters und Schalten des Verbrennungsmotors in den Vorbereitungs-Betriebszustand oder den Regenerations-Betriebszustand, wenn die Temperatur der Abgase während eines vorbestimmten Zeitintervalls oberhalb eines oberen Abgas-Temperaturschwellenwerts liegt.

Man unterscheidet innermotorische und außermotorische Nacheinspritzungen. Die Kraftstoffmenge bei einer innermotorischen Nacheinspritzung wird noch im aktuellen Arbeitstakt des Zylinders umgesetzt (d.h. sie trägt zur Verbrennung im Zylinder bei und ist somit momentenbildend). Dagegen wird die Kraftstoffmenge bei einer außermotorischen Nacheinspritzung nicht mehr im aktuellen Arbeitstakt umgesetzt (d.h. sie verbrennt nicht im Zylinder und ist somit nicht momentenbildend), sondern wird unverbrannt in Richtung der Abgasanlage ausgeschoben. Eine außermotorische Nacheinspritzung erfolgt in der Regel im Ausschubtakt und sorgt dafür, dass unverbrannter Kraftstoff in die Abgasanlage gelangt, um dort verbrannt zu werden und damit die Temperatur insbesondere im Partikelfilter zu erhöhen.

Wenn bei einem vergleichsweise kalten Motor eine Regeneration des Partikelfilters durchzuführen ist, muss die Motortemperatur und damit einhergehend die Temperatur der Abgase möglichst rasch angehoben werden. Dazu werden die Kraftstoffmengen, welche in Form von Nacheinspritzungen dem Zylinder zugeführt werden, entsprechend angehoben, wodurch die Gefahr, dass der nacheingespritzte Kraftstoff an die kalte Zylinderlaufbahn und von dort in das Motorenöl gelangt, weiter ansteigt. Darüber hinaus sind die Umsetzung des nacheingespritzten Kraftstoffs und die Generierung eines zündfähigen Gemisches in einem kalten Brennraum im Vergleich zu einem heißen Brennraum deutlich reduziert. Durch die erfindungsgemäße Aufteilung auf eine größere Anzahl von Nacheinspritzungen im Vorwärm-Betriebszustand wird vorteilhafterweise zum einen pro Nacheinspritzung eine geringere Kraftstoffmenge eingespritzt, wodurch die Gefahr sinkt, dass die eingespritzte Kraftstoffmenge die Zylinderlaufbahn erreicht. Zum anderen wird der nacheinzuspritzende Kraftstoff feiner verteilt, was die Generierung eines zündfähigen Gemischs verbessert.

Neben dem Vorwärm-Betriebszustand existieren weitere Betriebszustände des Verbrennungsmotors, in welchen eine Nacheinspritzung durchgeführt wird. Beispielsweise können in dem Regenerations-Betriebszustand eine oder mehrere Nacheinspritzungen durchgeführt werden. Dabei kann es sich ausschließlich um außermotorische Nacheinspritzungen oder um innermotorische und außermotorische Nacheinspritzungen handeln. Die Anzahl der innermotorischen Nacheinspritzungen ist allerdings kleiner als im Vorwärm-Betriebszustand.

Der Vorwärm-Betriebszustand wird verlassen, (um wie erwähnt beispielsweise in den Regenerations-Betriebszustand zu schalten), wenn die Temperatur der Abgase oberhalb des vorbestimmten oberen Abgas-Temperaturschwellenwerts liegt oder wenn die Temperatur der Abgase während eines vorbestimmten Zeitintervalls (z.B. 60 s) oberhalb des oberen Abgas-Temperaturschwellenwerts liegt.

In den Vorwärm-Betriebszustand wird insbesondere dann geschaltet, wenn erfasst wird, dass die Regeneration des Partikelfilters erforderlich ist, und wenn gleichzeitig erfasst wird, dass die Temperatur der Abgase kleiner als der obere Abgas-Temperaturschwellenwert (z.B. 350° C) ist.

Dabei kann die Temperatur der Abgase beispielsweise direkt nach dem Auslassventil bzw. im Abgaskrümmer erfasst werden.

Gemäß einer bevorzugten erfindungsgemäßen Ausführungsform erfolgt eine erste Nacheinspritzung in dem Vorwärm-Betriebszustand in einem Kurbelwinkelbereich von -30° bis - 45°. Diese erste Nacheinspritzung dient dem Zweck, die Verbrennung innerhalb des Kolbens zu verschleppen und zu möglichst späten Kurbelwinkelbereichen zu verlagern. Darüber hinaus erfolgen bei dieser Ausführungsform mehrere zweite Nacheinspritzungen, welche in einem Kurbelwinkelbereich von -50° bis - 60° eingespritzt werden. Diese zweiten Nacheinspritzungen dienen dem Zweck, eine in den zweiten Nacheinspritzungen enthaltene Enthalpie möglichst vollständig in eine Erhöhung der Temperatur der Abgase zu überführen. Mit anderen Worten verbrennt der Kraftstoff, welcher in Form der zweiten Nacheinspritzungen eingespritzt wird, nahezu vollständig im Zylinder und sorgt damit dafür, dass die Temperatur der Abgase ansteigt.

Insbesondere wird bei der vorab beschriebenen Ausführungsform die Temperatur der Abgase ermittelt und dann die Kraftstoffmenge, welche in Form der zweiten Nacheinspritzungen eingespritzt wird, umso größer gewählt, je geringer die Temperatur der Abgase ist.

Umso geringer die Temperatur der Abgase ist, umso schneller sollte diese Temperatur erhöht werden, weshalb die Kraftstoffmenge abhängig von der Temperatur eingestellt wird.

Erfindungsgemäß ist es möglich, dass in dem Vorwärm-Betriebszustand zusätzlich eine außermotorische Nacheinspritzung vorgenommen wird, um dem Partikelfilter unverbrannten Kraftstoff zuzuführen.

Mit anderen Worten ist die vorliegende Erfindung unabhängig von außermotorischen Nacheinspritzungen. D.h. in dem erfindungsgemäßen Vorwärm-Betriebszustand kann eine außermotorische Nacheinspritzung stattfinden oder nicht.

Erfindungsgemäß wird nur in den Vorwärm-Betriebszustand geschaltet,
- wenn die Temperatur des Kühlwassers des Verbrennungsmotors größer als ein vorbestimmter Kühlwasser-Temperaturschwellenwert (z.B. 20° C) ist, und/oder
- wenn die Temperatur des Abgase größer als ein unterer Abgas-Temperaturschwellenwert (z.B. 130° C) ist, und/oder
- wenn das Fahrzeug seit dem Start des Verbrennungsmotors eine vorbestimmte Wegstrecke (z.B. 10 m) zurückgelegt hat.

Durch die vorab beschriebenen ersten beiden Bedingungen wird zum einen verhindert, dass bei einem sehr kalten Motor quasi sofort nach dem Start des Verbrennungsmotors in den Vorwärm-Betriebszustand geschaltet wird. Die letzte Bedingung verhindert, dass bei einem beim Start des Verbrennungsmotors stehenden Fahrzeug in den Vorwärm-Betriebszustand geschaltet wird, bevor das Fahrzeug losfährt. Dadurch wird beispielsweise verhindert, dass bei einem Freikratzen des vereisten Fahrzeugs mit laufendem Verbrennungsmotor in den Vorwärm-Betriebszustand geschaltet wird.

Wie bereits vorab schon ausgeführt wurde, kann es sich bei dem weiteren Betriebszustand um einen Regenerations-Betriebszustand handeln, in welchem das Partikelfilter regeneriert wird. Es ist aber auch möglich, dass es sich bei dem weiteren Zustand um einen Vorbereitungs-Betriebszustand handelt, aus welchem direkt in den Regenerations-Betriebszustand geschaltet wird. Im Unterschied zum Vorwärm-Betriebszustand wird insbesondere in den Vorbereitungs-Betriebszustand geschaltet, wenn der Motor bereits eine Temperatur aufweist, so dass die Gefahr der Ölverdünnung aufgrund von Nacheinspritzungen minimal ist. Ähnlich wie der Vorwärm-Betriebszustand hat der Vorbereitungs-Betriebszustand die Aufgabe, die Temperatur der Abgase für eine anschließende Regeneration zu erhöhen.

Im Rahmen der vorliegenden Erfindung werden auch Steuermittel für einen Verbrennungsmotor mit Partikelfilter für ein Fahrzeug bereitgestellt. Dabei sind die Steuermittel gemäß den Merkmalen nach Anspruch 6 ausgestaltet, um zum Vorwärmen von Abgasen des Verbrennungsmotors in einen Vorwärm-Betriebszustand des Verbrennungsmotors zu schalten. Darüber hinaus sind die Steuermittel ausgestaltet, um in dem Vorwärm-Betriebszustand eine innermotorische nacheinzuspritzende Kraftstoffmenge auf eine Anzahl von innermotorischen Nacheinspritzungen aufzuteilen, welche größer ist als in einem anderen bzw. weiteren Betriebszustand des Verbrennungsmotors, welcher sich von dem Vorwärm-Betriebszustand unterscheidet.

Die Vorteile der erfindungsgemäßen Steuermittel entsprechen im Wesentlichen den Vorteilen des erfindungsgemäßen Verfahrens, welche vorab im Detail ausgeführt sind, so dass hier auf eine Wiederholung verzichtet wird.

Schließlich wird im Rahmen der vorliegenden Erfindung ein Fahrzeug nach Anspruch 8 bereitgestellt, welches einen Verbrennungsmotor mit einem Partikelfilter und die erfindungsgemäßen Steuermittel nach Anspruch 6 umfasst.

Die vorliegende Erfindung ist insbesondere für Fahrzeuge geeignet, mit welchen meist nur kurze Strecken zurückgelegt werden. In diesem Fall müssen die Abgase in einer kurzen Zeitspanne erwärmt werden, um auch während einer Kurzstreckenfahrt die Regeneration des Partikelfilters durchführen zu können. Die vorliegende Erfindung sorgt dafür, dass trotz der Nacheinspritzungen zur raschen Erwärmung der Abgase vorteilhafterweise nur ein wesentlich geringerer Anteil des Kraftstoffs in das Motorenöl gelangt, als dies nach dem Stand der Technik der Fall ist. Darüber hinaus verringert der erfindungsgemäße Vorwärm-Betriebszustand eine Geruchsbelästigung aufgrund von unverbrannten Kohlenwasserstoffen, welche nach dem Stand der Technik in der Kaltstartphase auf einen kalten Katalysator treffen.

Im Folgenden wird die vorliegende Erfindung anhand bevorzugter erfindungsgemäßer Ausführungsformen mit Bezug zu den Figuren im Detail erläutert.
In Fig. 1 sind innermotorische Nacheinspritzungen nach dem Stand der Technik dargestellt.
In Fig. 2 sind innermotorische Nacheinspritzungen gemäß der vorliegenden Erfindung dargestellt.
In Fig. 3 ist ein erfindungsgemäßes Fahrzeug mit erfindungsgemäßen Steuermitteln dargestellt.

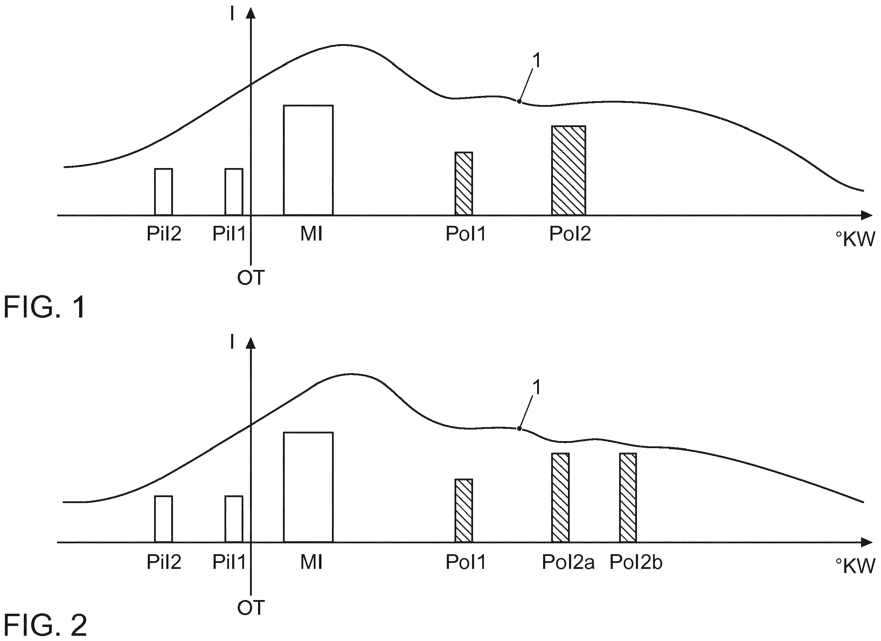

Um die Temperatur der Abgase zu erhöhen, werden die Einspritzungen im Vergleich zu einem Normalbetrieb des Verbrennungsmotors insgesamt zu späteren Kurbelwinkelbereichen verschoben, wie es in Fig. 1 dargestellt ist. Dabei erfolgen zwei Voreinspritzungen Pil1 und Pil2 knapp vor dem oberen Totpunkt (entspricht einem Kurbelwinkel von 0°), und die Haupteinspritzung MI erfolgt in einem Kurbelwinkelbereich von 0° bis -14°. Anschließend erfolgen zwei Nacheinspritzungen Pol1, Pol2, um die innermotorische Temperatur und damit die Temperatur der Abgase zu erhöhen. Man erkennt, dass der Brennverlauf 1 durch die Nacheinspritzungen Pol1, Pol2 zu späten Kurbelwinkelbereichen verschleppt bzw. verlängert wird.

Erfindungsgemäß wird nun die zweite Nacheinspritzung Pol2 in mehrere Nacheinspritzungen Pol2a, Pol2b aufgeteilt, wie es in Fig. 2 dargestellt ist. Mit anderen Worten wird die Kraftstoffmenge, welche nach dem Stand der Technik mit nur einer zweiten Nacheinspritzung Pol2 eingespritzt wird, nun mit mehreren zweiten Nacheinspritzungen Pol2a, Pol2b eingespritzt. Dadurch wird die Eindringtiefe der einzelnen zweiten Nacheinspritzung Pol2a, Pol2b gegenüber dem Stand der Technik mit nur einer zweiten Nacheinspritzung Pol2 stark verringert.

Wenn also nach dem Stand der Technik mit nur einer zweiten Nacheinspritzung Pol2 eine Kraftstoffmenge von 3 mg bis 17 mg pro Hub eingespritzt wird, kann diese Kraftstoffmenge pro zweiter Nacheinspritzung Pol2a, Pol2b auf 3/n mg bis 17/n mg reduziert werden, wobei n für die Anzahl der zweiten Nacheinspritzungen steht. Natürlich kann die mit den zweiten Nacheinspritzungen einzuspritzende Kraftstoffmenge auch ungleichmäßig auf die zweiten Nacheinspritzungen Pol2a, Pol2b aufgeteilt werden. Die genaue Kraftstoffmenge, die auf die zweiten innermotorischen Nacheinspritzungen aufzuteilen ist, hängt von dem Einspritzdruck (Raildruck), von dem aktuellen Lastpunkt, von der Kühlwassertemperatur, der Außenlufttemperatur, der Motortemperatur, der Drehzahl und weiteren Parametern ab.

Gemäß einer bevorzugten Ausführungsform der vorliegenden Erfindung wird eine Nacheinspritzung, welche nach dem Stand der Technik als außermotorische Nacheinspritzung (Kurbelwinkelbereich -180° bis -220°) eingesetzt wird, erfindungsgemäß zusätzlich als innermotorische Nacheinspritzung Pol2b eingesetzt. Anders ausgedrückt wird diese zusätzliche innermotorische Nacheinspritzung Pol2b additiv zu den beiden innermotorischen Nacheinspritzungen Pol1, Pol2a zum Anheben der innermotorischen Temperatur eingesetzt. Bei dieser Ausführungsform wird die zusätzliche Nacheinspritzung Pol2b in dem Regenerations-Betriebszustand als außermotorische Nacheinspritzung zur Kraftstoffeinbringung kurz vor bzw. während des Ausstoßtaktes in die Abgasanlage genutzt, um in der Abgasanlage (insbesondere im Partikelfilter) zu verbrennen. Diese Ausführungsform unterscheidet sich von dem Stand der Technik, bei welchem die zusätzliche Nacheinspritzung Pol2b ausschließlich außermotorisch eingesetzt werden kann, da die zusätzliche Nacheinspritzung Pol2b nach dem Stand der Technik nur in einem Kurbelwinkelbereich von -180° bis -220° aktiviert werden kann und eine Verschiebung in einen Kurbelwinkelbereich von -50° bis -60° für diese zusätzliche bzw. dritte Nacheinspritzung in der standardmäßigen Motorsteuerung nicht vorgesehen ist. Ergänzend sei darauf hingewiesen, dass auch eine Aufteilung der zweiten innermotorischen Nacheinspritzung in mehrere innermotorische Nacheinspritzungen in der standardmäßigen Motorsteuerung nicht vorgesehen ist.

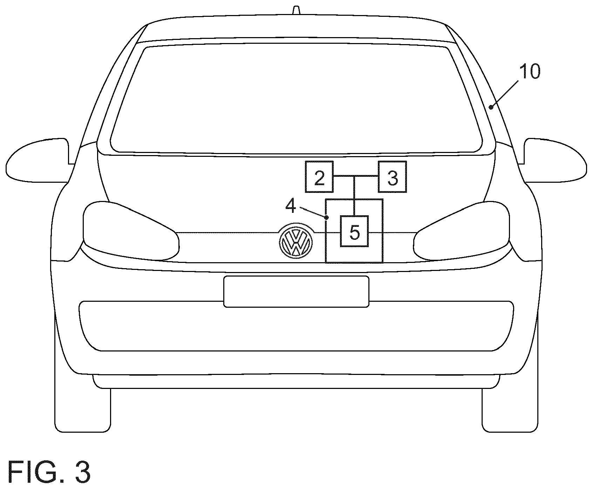

In Fig. 3 ist ein erfindungsgemäßes Fahrzeug 10 dargestellt, welches einen Verbrennungsmotor 2 mit Partikelfilter 3 und erfindungsgemäße Steuermittel 4 umfasst. Dabei umfassen die Steuermittel 4 einen Temperatursensor 5, um die Temperatur der Abgase des Verbrennungsmotors 2 zu erfassen. Abhängig von der Abgastemperatur, welche mit dem Sensor 5 erfasst wird, schalten die Steuermittel 4 den Verbrennungsmotor 2 in eine Vorwärm-Betriebsart, in welcher die Anzahl der zweiten Nacheinspritzungen Pol2a, Pol2b erhöht wird.

### Bezugszeichenliste

- 1: Brennverlauf
- 2: Motor
- 3: Partikelfilter
- 4: Steuerung
- 5: Sensor
- I: eingespritzte Kraftstoffmenge
- °KW: Kurbelwellenwinkel
- MI: Haupteinspritzung
- Pilx: Voreinspritzung
- Polx: Nacheinspritzung
- OT: oberer Totpunkt

## Patentansprüche

1. Verfahren zur schnellen Anhebung der Motor- und Abgastemperatur eines kalten Verbrennungsmotors (2) für ein Fahrzeug (10) auf eine Abgastemperatur, die zur Regeneration eines Partikelfilters (3) in einem Regenerations-Betriebszustand oberhalb eines vorbestimmten Temperaturschwellenwerts liegt,
wobei das Verfahren folgende Schritte umfasst:
• Schalten in einen Vorwärm-Betriebszustand in dem eine Vorwärmung von Abgasen des Verbrennungsmotors (2) durchgeführt wird,
∘ wenn die Temperatur des Kühlwassers des Verbrennungsmotors (2) größer als ein vorbestimmter Kühlwasser-Temperaturschwellenwert ist, und/oder
∘ wenn die Temperatur der Abgase größer als ein unterer Abgas-Temperaturschwellenwert ist, und/oder
∘ wenn das Fahrzeug seit dem Start des Verbrennungsmotors eine vorbestimmte Wegstrecke zurückgelegt hat,
• Aufteilen einer innermotorisch nacheinzuspritzenden Kraftstoffmenge auf eine Anzahl von innermotorischen Nacheinspritzungen (Pol1, Pol2a, Pol2b) während des Vorwärm-Betriebszustandes, wobei in dem Vorwärm-Betriebszustand innermotorisch eine Kraftstoffmenge in der ersten Nacheinspritzung (Pol1) und unter Aufteilung der Kraftstoffmenge der zweiten innermotorischen Nacheinspritzung (Pol2) eine Anzahl (n; n > 1) von zwei innermotorischen Nacheinspritzungen (Pol2a, Pol2b) mit reduzierten Kraftstoffmengen pro innermotorischer Nacheinspritzung (Pol2a, Pol2b) vorgenommen werden, wobei die Anzahl von innermotorischen Nacheinspritzungen (Pol1, Pol2a, Pol2b) größer ist als die Anzahl von innermotorischen Nacheinspritzungen in dem Regenerations-Betriebszustand oder einem Vorbereitungs-Betriebszustand bei dem zur Vorbereitung der Regeneration direkt in den Regenerations-Betriebszustand geschaltet wird, und
• Verlassen des Vorwärm-Betriebszustandes des Verbrennungsmotors (2) zur Regeneration des Partikelfilters (3) und Schalten des Verbrennungsmotors (2) in den Vorbereitungs-Betriebszustand oder den Regenerations-Betriebszustand, wenn die Temperatur der Abgase während eines vorbestimmten Zeitintervalls oberhalb eines oberen Abgas-Temperaturschwellenwerts liegt.

2. Verfahren nach Anspruch 1, **dadurch gekennzeichnet, dass** in den Vorwärm-Betriebszustand geschaltet wird, wenn die Regeneration des Partikelfilters (3) erforderlich ist, und wenn gleichzeitig eine Temperatur der Abgase kleiner als ein vorbestimmter oberer Abgas-Temperaturschwellenwert ist.

3. Verfahren nach Anspruch 1 oder 2,
**dadurch gekennzeichnet,**
**dass** in dem Vorwärm-Betriebszustand eine erste Nacheinspritzung (Pol1) in einem Kurbelwinkelbereich von -30° bis -45° eingespritzt wird, um eine Verbrennung innerhalb des Kolbens zu möglichst späten Kurbelwinkelbereichen zu verschleppen, und
**dass** in dem Vorwärm-Betriebszustand mehrere zweite Nacheinspritzungen (Pol2a, Pol2b) in einem Kurbelwinkelbereich von -50° bis -60° eingespritzt werden, um eine in den zweiten Nacheinspritzungen (Pol2a, Pol2b) enthaltene Enthalpie möglichst vollständig in eine Erhöhung der Temperatur der Abgase zu überführen.

4. Verfahren nach Anspruch 3,
**dadurch gekennzeichnet,**
**dass** eine Temperatur der Abgase ermittelt wird, und
**dass** die von den zweiten Nacheinspritzungen (Pol2a, Pol2b) eingespritzte Kraftstoffmenge umso größer gewählt wird, je kleiner eine Temperatur der Abgase ist.

5. Verfahren nach Anspruch 1 oder 2, **dadurch gekennzeichnet, dass** in dem Vorwärm-Betriebszustand zusätzlich eine außermotorische Nacheinspritzung ausgeführt wird, um eine unverbrannte Kraftstoffmenge dem Partikelfilter (3) zuzuführen.

6. Steuermittel für einen Verbrennungsmotor (2) mit Partikelfilter (3) für ein Fahrzeug (10), wobei die Steuermittel (4) zur schnellen Anhebung der Motor- und Abgastemperatur eines kalten Verbrennungsmotors (2) für das Fahrzeug (10) auf eine Abgastemperatur ausgestaltet sind, die zur Regeneration des Partikelfilters (3) in einem Regenerations-Betriebszustand oberhalb eines vorbestimmten Temperaturschwellenwerts liegt, wobei die Steuermittel (4) ferner ausgestaltet sind,
• um in einen Vorwärm-Betriebszustand des Verbrennungsmotors (2) zu schalten,
∘ in dem eine Vorwärmung von Abgasen des Verbrennungsmotors (2) durchgeführt wird, wenn die Temperatur des Kühlwassers des Verbrennungsmotors (2) größer als ein vorbestimmter Kühlwasser-Temperaturschwellenwert ist, und/oder
∘ wenn die Temperatur der Abgase größer als ein unterer Abgas-Temperaturschwellenwert ist, und/oder
∘ wenn das Fahrzeug seit dem Start des Verbrennungsmotors eine vorbestimmte Wegstrecke zurückgelegt hat, und
• um den Vorwärm-Betriebszustand des Verbrennungsmotors (2) zur Regeneration des Partikelfilters (3) durch Schalten des Verbrennungsmotors (2) in einen sich von dem Vorwärm-Betriebszustand unterscheidenden Betriebszustand zu verlassen, wenn die Temperatur der Abgase während eines vorbestimmten Zeitintervalls oberhalb eines oberen Abgas-Temperaturschwellenwerts liegt,
• um eine innermotorisch nacheinzuspritzende Kraftstoffmenge auf eine Anzahl von innermotorischen Nacheinspritzungen (Poll, Pol2a, Pol2b) während des Vorwärm-Betriebszustandes aufzuteilen, wobei in dem Vorwärm-Betriebszustand innermotorisch eine Kraftstoffmenge in der ersten Nacheinspritzung (Pol1) und unter Aufteilung der Kraftstoffmenge der zweiten innermotorischen Nacheinspritzung (Pol2) eine Anzahl (n; n > 1) von zwei innermotorischen Nacheinspritzungen (Pol2a, Pol2b) mit reduzierten Kraftstoffmengen pro innermotorischer Nacheinspritzung (Pol2a, Pol2b) vorgenommen werden, wobei die Anzahl von innermotorischen Nacheinspritzungen (Pol1, Pol2a, Pol2b) größer ist als die Anzahl von innermotorischen Nacheinspritzungen in dem Regenerations-Betriebszustand oder einem Vorbereitungs-Betriebszustand bei dem zur Vorbereitung der Regeneration direkt in den Regenerations-Betriebszustand geschaltet wird

7. Steuermittel nach Anspruch 6, **dadurch gekennzeichnet, dass** die Steuermittel (4) zur Durchführung des Verfahrens nach einem der Ansprüche 1-7 ausgestaltet sind.

8. Fahrzeug mit einem Verbrennungsmotor (2), der in einem Verfahren zur Regeneration eines Partikelfilters (3) eines Verbrennungsmotors (2) nach mindestens einem der Ansprüche 1-5 betrieben wird, wobei das Fahrzeug Steuermittel (4) nach Anspruch 6 oder 7 aufweist.

## Claims

1. Method for rapidly raising the engine temperature and exhaust gas temperature of a cold internal combustion engine (2) for a vehicle (10) to an exhaust gas temperature which is above a predetermined temperature threshold value for the regeneration of a particle filter (3) in a regeneration operating state, wherein the method comprises the following steps:
• switching to a pre-heating operating state in which pre-heating of exhaust gases of the internal combustion engine (2) is carried out,
° if the temperature of the cooling water of the internal combustion engine (2) is higher than a predetermined cooling water temperature threshold value, and/or
° if the temperature of the exhaust gases is higher than a lower exhaust gas temperature threshold value, and/or
° if the vehicle has travelled a predetermined distance since the start of the internal combustion engine,
• dividing a quantity of fuel which is to be subsequently injected within the engine into a number of post-injections (Poll, Pol2a, Pol2b) within the engine during the pre-heating operating state, wherein in the pre-heating operating state a quantity of fuel within the engine in the first post-injection (Poll), and by dividing the quantity of fuel of the second post-injection (Pol2) within the engine a number (n; n > 1) of two post-injections (Pol2a, Pol2b) within the engine are performed with reduced quantities of fuel per post-injection (Pol2a, Pol2b) within the engine, wherein the number of post-injections (Poll, Pol2a, Pol2b) within the engine is higher than the number of post-injections within the engine in the regeneration operating state or a preparation operating state in which the regeneration operating state is directly switched to in order to prepare for regeneration, and
• exiting the pre-heating operating state of the internal combustion engine (2) in order to regenerate the particle filter (3) and switch the internal combustion engine (2) to the preparation operating state or to the regeneration operating state if the temperature of the exhaust gases is above an upper exhaust gas temperature threshold value during a predetermined time interval.

2. Method according to Claim 1, **characterized in that** the pre-heating operating state is switched to if the regeneration of the particle filter (3) is necessary and if at the same time a temperature of the exhaust gases is lower than a predetermined upper exhaust gas temperature threshold value.

3. Method according to Claim 1 or 2,
**characterized**
**in that** in the pre-heating operating state a first post-injection (Poll) is injected in a crank angle range of -30° to -45°, in order to delay a combustion within the piston to the latest possible crank angle ranges, and in that in the pre-heating operating state a plurality of second post-injections (Pol2a, Pol2b) are injected into a crank angle range of -50° to -60°, in order to convert enthalpy contained in the second post-injections (Pol2a, Pol2b) as completely as possible into an increase in the temperature of the exhaust gases.

4. Method according to Claim 3,
**characterized**
**in that** a temperature of the exhaust gases is determined, and
**in that** the quantity of fuel which is injected by the second post-injections (Pol2a, Pol2b) is selected to be larger the lower a temperature of the exhaust gases is.

5. Method according to Claim 1 or 2, **characterized in that** in the pre-heating operating state a post-injection outside the engine is additionally carried out in order to feed an unburnt quantity of fuel to the particle filter (3).

6. Control means for an internal combustion engine (2) with particle filter (3) for a vehicle (10), wherein the control means (4) are configured in order to rapidly raise the engine temperature and exhaust gas temperature of a cold internal combustion engine (2) for the vehicle (10) to an exhaust gas temperature which is above a predetermined temperature threshold value for the regeneration of the particle filter (3) in a regeneration operating state,
wherein the control means (4) are also configured,
• to switch to a pre-heating operating state of the internal combustion engine (2),
° in which pre-heating of exhaust gases of the internal combustion engine (2) is carried out if the temperature of the cooling water of the internal combustion engine (2) is higher than a predetermined cooling water temperature threshold value, and/or
° if the temperature of the exhaust gases is higher than a lower exhaust gas temperature threshold value, and/or
° if the vehicle has travelled a predetermined distance since the start of the internal combustion engine, and
• in order to exit the pre-heating operating state of the internal combustion engine (2) in order to regenerate the particle filter (3) by switching the internal combustion engine (2) to an operating state which is different from the pre-heating operating state if the temperature of the exhaust gases is above an upper exhaust gas temperature threshold value during a predetermined time interval,
• in order to divide a quantity of fuel which is to be subsequently injected within the engine into a number of post-injections (Poll, Pol2a, Pol2b) within the engine during the pre-heating operating state, wherein in the pre-heating operating state a quantity of fuel within the engine in the first post-injection (Poll), and by dividing the quantity of fuel of the second post-injection (Pol2) within the engine a number (n; n > 1) of two post-injections (Pol2a, Pol2b) within the engine are performed with reduced quantities of fuel per post-injection (Pol2a, Pol2b) within the engine, wherein the number of post-injections (Poll, Pol2a, Pol2b) within the engine is higher than the number of post-injections within the engine in the regeneration operating state or a preparation operating state in which the regeneration operating state is directly switched to in order to prepare for regeneration.

7. Control means according to Claim 6, **characterized in that** the control means (4) are configured to carry out the method according to one of Claims 1 to 7.

8. Vehicle having an internal combustion engine (2) which is operated in a method for regenerating a particle filter (3) of an internal combustion engine (2) according to at least one of Claims 1-5, wherein the vehicle has control means (4) according to Claim 6 or 7.

## Revendications

1. Procédé d'augmentation rapide de la température du moteur et des gaz d'échappement d'un moteur froid (2), destiné à un véhicule (10), à une température de gaz d'échappement supérieure à un seuil de température prédéterminé pour la régénération d'un filtre à particules (3) dans un mode de fonctionnement en régénération,
le procédé comprenant les étapes suivantes :
• commuter dans un mode de fonctionnement en préchauffage dans lequel un préchauffage des gaz d'échappement du moteur à combustion interne (2) est effectué,
∘ lorsque la température de l'eau de refroidissement du moteur à combustion interne (2) est supérieure à un seuil de température d'eau de refroidissement prédéterminé, et/ou
∘ lorsque la température des gaz d'échappement est supérieure à un seuil de température de gaz d'échappement inférieur, et/ou
∘ lorsque le véhicule a parcouru une distance prédéterminée depuis le démarrage du moteur à combustion interne,
• diviser une quantité de carburant à post-injecter en interne au moteur en un certain nombre de post-injections internes au moteur (Pol1, Pol2a, Pol2b) pendant le mode de fonctionnement en préchauffage, pendant le mode de fonctionnement en préchauffage, une quantité de carburant de manière interne au moteur dans la première post-injection (Pol1) et, par division de la quantité de carburant de la deuxième post-injection interne au moteur (Pol2), un nombre (n ; n>1) de deux post-injections internes au moteur (Pol2a, Pol2b) étant effectuées avec des quantités de carburant réduites par post-injection interne au moteur (Pol2a, Pol2b), le nombre de post-injections internes au moteur (Pol1, Pol2a, Pol2b) étant supérieur au nombre de post-injections internes au moteur dans le mode de fonctionnement en régénération ou dans un mode de fonctionnement préparatoire dans lequel, en vue de la régénération, une commutation est effectuée directement dans le mode de fonctionnement en régénération, et
• quitter le mode de fonctionnement en préchauffage du moteur à combustion interne (2) pour régénérer le filtre à particules (3) et commuter le moteur à combustion interne (2) dans le mode de fonctionnement préparatoire ou dans le mode de fonctionnement en régénération lorsque la température des gaz d'échappement est supérieure, pendant un intervalle de temps prédéterminé, au seuil de température de gaz d'échappement.

2. Procédé selon la revendication 1, **caractérisé en ce qu'**une commutation dans un mode de fonctionnement en préchauffage est effectuée lorsque la régénération du filtre à particules (3) est requise et **en ce que**, simultanément, la température des gaz d'échappement est inférieure à un seuil de température de gaz d'échappement supérieur prédéterminé.

3. Procédé selon la revendication 1 ou 2,
**caractérisé en ce que**,
dans le mode de fonctionnement en préchauffage, une première post-injection (Pol1) est effectuée dans une plage d'angle de vilebrequin de -30° à -45° afin de retarder la combustion dans le piston à des plages d'angle de vilebrequin les plus tardives possibles, et **en ce que**, dans le mode de fonctionnement en préchauffage, plusieurs deuxièmes post-injections (Pol2a, Pol2b) sont effectuées dans une plage d'angle de vilebrequin de -50° à -60° afin de convertir autant que possible complètement l'enthalpie de la deuxième post-injection (Pol2a, Pol2b) en une augmentation de la température des gaz d'échappement.

4. Procédé selon la revendication 3,
**caractérisé en ce que**
la température des gaz d'échappement est déterminée et **en ce que**
plus la température des gaz d'échappement est basse, plus la quantité de carburant injectée par les deuxièmes post-injections (Pol2a, Pol2b) est importante.

5. Procédé selon la revendication 1 ou 2, **caractérisé en ce que**, dans le mode de fonctionnement en préchauffage, une post-injection externe au moteur est en outre effectuée pour amener une quantité de carburant non brûlé au filtre à particules (3).

6. Moyens de commande d'un moteur à combustion interne (2) pourvu d'un filtre à particules (3), destiné à un véhicule (10), les moyens de commande (4) étant conçus pour augmenter rapidement la température de moteur et de gaz d'échappement d'un moteur à combustion interne à froid (2), destiné au véhicule (10), à une température de gaz d'échappement supérieure à un seuil de température prédéterminé pour régénérer le filtre à particules (3) dans un mode de fonctionnement en régénération,
les moyens de commande (4) étant en outre conçus
• pour commuter dans un mode de fonctionnement en préchauffage du moteur à combustion interne (2),
∘ dans lequel le préchauffage des gaz d'échappement du moteur à combustion (2) est effectué lorsque la température de l'eau de refroidissement du moteur (2) est supérieure à une valeur de seuil de température d'eau de refroidissement prédéterminée, et/ou
∘ lorsque la température des gaz d'échappement est supérieure à une valeur de seuil de température de gaz d'échappement inférieure, et/ou
∘ lorsque le véhicule a parcouru une distance prédéterminée depuis le démarrage du moteur, et
• pour quitter le mode de fonctionnement en préchauffage du moteur à combustion interne (2) pour régénérer le filtre à particules (3) et commuter le moteur à combustion interne (2) dans le mode de fonctionnement préparatoire ou dans le mode de fonctionnement en régénération lorsque la température des gaz d'échappement est supérieure, pendant un intervalle de temps prédéterminé, au seuil de température de gaz d'échappement,
• pour diviser une quantité de carburant à post-injecter en interne au moteur en un certain nombre de post-injections internes au moteur (Pol1, Pol2a, Pol2b) pendant le mode de fonctionnement en préchauffage, pendant le mode de fonctionnement en préchauffage, une quantité de carburant de manière interne au moteur dans la première post-injection (Pol1) et, par division de la quantité de carburant de la deuxième post-injection interne au moteur (Pol2), un certain nombre (n ; n>1) de deux post-injections internes au moteur (Pol2a, Pol2b) étant effectuées avec des quantités de carburant réduites par post-injection interne au moteur (Pol2a, Pol2b), le nombre de post-injections internes au moteur (Pol1, Pol2a, Pol2b) étant supérieur au nombre de post-injections internes au moteur dans le mode de fonctionnement en régénération ou dans un mode de fonctionnement préparatoire dans lequel, en vue de la régénération, une commutation est effectuée directement dans le mode de fonctionnement en régénération.

7. Moyens de commande selon la revendication 6, **caractérisés en ce que** les moyens de commande (4) sont conçus pour mettre en oeuvre le procédé selon l'une des revendications 1 à 7.

8. Véhicule équipé d'un moteur à combustion (2) qui est utilisé dans un procédé de régénération d'un filtre à particules (3) d'un moteur à combustion interne (2) selon au moins l'une des revendications 1 à 5, le véhicule (4) comportant des moyens de commande selon la revendication 6 ou 7.
